# EUROPEAN PATENT SPECIFICATION

(11) **EP 3 361 183 B1**
(45) Date of publication and mention of the grant of the patent: **18.12.2019**
(21) Application number: 18155742.2
(22) Date of filing: 08.02.2018
(51) Int. Cl.: F24S 25/33

(54) **STABILISATION ELEMENT AND METHOD FOR STABILIZING A ROOF HOOK WITH RESPECT TO A ROOF TILE**
STABILISIERUNGSELEMENT UND VERFAHREN ZUR STABILISIERUNG EINES DACHHAKENS IN RELATION ZU EINEM DACHZIEGEL
ÉLÉMENT DE STABILISATION ET PROCÉDÉ DE STABILISATION D'UN CROCHET DE TOIT PAR RAPPORT À UNE TUILE DE TOIT

(30) Priority: 08.02.2017 NL 2018344
(43) Date of publication of application: 15.08.2018
(73) Proprietor: Esdec B.V., 7418 EE Deventer (NL)
(72) Inventor: DE VOGEL, Vincent, 7418 EE Deventer (NL); DE VOGEL, Jeroen, 7418 EE Deventer (NL); TE BOEKHORST, Laurens, 7418 EE Deventer (NL)
(74) Representative: Patentwerk B.V.

(56) References cited:
- DE-A1-102013 010 251
- DE-U1-202009 007 489
- JP-A- H04 279 473
- JP-A- H08 100 983

## Description

The invention relates to a stabilization element. The invention also relates to an assembly of a stabilization element and a roof hook. The invention also relates to a method for stabilizing a roof hook with respect to a roof tile, in particular by using a stabilization element according to the invention. The invention additionally relates to the use of a stabilization element according to the invention for stabilizing a roof hook with respect to a roof tile.

JP H08 100983 A discloses a spacer comprising several stackable segments.

DE 20 2009 007489 U1 discloses a pressure distributing element to be installed between a roof and a roof hook.

Attaching solar panels to both flat and pitched roofs is a common activity and can be simplified by using a fitting device intended for this purpose. A known fitting device for relatively simply and quickly fitting solar panels to a roof which may or may not be pitched is described in NL1028379. The known fitting device comprises a roof hook which can be coupled to the roof, and a mounting rail which can be coupled to a free end of the roof hook for supporting solar panels. The roof hook is configured to interact with a part of the roof, in particular with a tile batten attached to the roof. In this case, the roof hook is covered between roof tiles which are supported by the tile battens. Using a roof hook is advantageous since both the tile battens and the tiles can be left fully intact. A drawback of the known roof hook, however, is that the roof hook is not suitable for stable interaction with particular roof tiles which are provided with an upwardly projecting water barrier on or near a top end side. In practice, this stabilization problem is solved by arranging a recess in the projecting water barrier, for example by means of a grinder, through which the roof hook can then be led, as a result of which the roof hook can bear against a top side of the roof tile in a more stable manner. This operation is relatively cumbersome, expensive and time-consuming, and also causes undesired permanent damage to the water-repellent capabilities of the particular roof tile. From a logistical and economic perspective, it is likewise not preferable to adapt the roof hook, in particular to deform it, in order to realize a stable interaction between the roof hook and the roof tile provided with the projecting water barrier.

An object of the invention is to provide a tool for allowing a roof hook to interact with a roof tile in a relatively stable manner without it being necessary to modify the roof hook or the roof tile.

To this end, the invention provides a stabilization element for stabilizing a roof hook with respect to a roof tile, comprising a chain of several filler segments pivotably connected to one another, and at least one fastening element connected to the chain for fastening the stabilization element to a roof hook, wherein the filler segments are pivotable with respect to one another in such a way that several filler segments can be brought into a stacked position in order to fill a space between a roof tile and a roof hook coupled to the roof tile in which the stabilization element on one side engages with a top side of the roof tile and on the other side engages with a part of the roof hook situated above which is at a distance from the roof tile, wherein at least one filler segment is provided with a coupling member, and wherein at least one adjacent filler segment is provided with a complementary coupling member, wherein the coupling member and the complementary coupling member are configured to interact with one another in the stacked position of said filler segments. The unstable interaction between a (known) roof hook and a (known) roof tile provided with an upwardly projecting water barrier is in particular brought about by virtue of the fact that the free end of an arm of the roof hook situated above, configured to be coupled to a mounting rail, is at a distance from the roof tile, as a result of which it can pivot relatively easily and is therefore relatively unstable. By stabilizing specifically this arm situated above, and particularly its free end which is configured to be coupled to a mounting rail, using the stabilization element according to the invention, the roof hook can interact with the particular roof tile in a significantly more stable manner. The more stable interaction which is realized is particularly understood to mean that the mutual orientation between the roof hook and the (particular) roof tile can be fixed more effectively, as a result of which the roof hook can move less easily with respect to the roof tile. The stabilizing effect is realized, in particular, by virtue of the fact that the arm of the roof hook which is situated above can rest on the top side of the roof tile situated below on or near the free end of this arm via the stabilization element. The space between the roof hook and the roof tile is filled by stacking several filler segments on top of one another, wherein the number of stacked filler segments required to fill the intermediate space depends on the dimensions of the filler segments and the distance between a free part of the arm of the roof hook situated above and the roof tile situated below. Since the filler segments are connected to one another in a pivotable manner, as a chain (or strip), it is conceivable that, in an operational state, not all filler segments are needed to fill said intermediate space and that one or more filler segments thus do not form part of the stacked filler segments. In this case, it is even conceivable for the fastening element itself to also function as a filler segment, and for the fastening element as such to already fill the space between the roof hook and the roof tile, as a result of which no further filler segments are required, and as a result of which filler segments therefore also do not need to be brought into a stacked position. It is also conceivable for a single filler segment positioned at a distance from the fastening element to already fill the space between the roof hook and the roof tile, as a result of which no further filler segments are required, and as a result of which filler segments therefore also do not need to be brought into a stacked position. This property of the stabilization element, in particular the use of several filler segments which are pivotable with respect to one another, increases a flexible use of the stabilization element, since the stabilization element is configured to fill both relatively small and relatively large spaces to be bridged. A further advantage of the stabilization element is that installation of the stabilization element takes place in a particularly simple manner by first fastening the fastening element to the roof hook, as a result of which the stabilization element is de facto, preferably in a detachable manner, connected to the roof hook, and subsequently stacking the desired number of filler segments on top of one another by means of mutual pivoting, or vice versa, after which the roof hook can rest on the top side of the roof tile via the stabilization element. In this case, it is not necessary to adapt the roof hook and/or the roof tile.

The chain of several filler segments pivotably connected to one another can also be seen as a series connection of filler segments.

In a stacked position, the stabilization element can also be seen as a filler segment and/or spacer. In a stacked position, the stabilization element ensures that the arm of the roof hook which is situated above and with which the stabilization element engages remains substantially parallel to a frontal surface of the roof tile. In this case, the stabilization element prevents the roof hook from deforming if the roof hook is subjected to a load for a relatively long time and/or as a result of, for example, weather influences. Moreover, using the stabilization element prevents contact points between the roof hook and a visible part of the top side of the roof tile, as a result of which (visible) damage to the roof tile can be prevented.

As already stated, the engagement of the stabilization element with the top side of the roof tile preferably takes place at a distance from an upwardly projecting water barrier which is positioned on or near an end top side of the roof tile. The engagement of the stabilization element, or at least of the stacked filler segments, with the roof tile will usually take place at a distance from each peripheral edge of the roof tile. The engagement of the stabilization element, or at least of the stacked filler segments, will usually take place with a central part of the roof tile (at a distance from each peripheral edge of the roof tile). Generally, an axis which passes through the stacked filler segments, during use of the stabilization element, will be substantially perpendicular to a part of the top side of the roof tile with which the stabilization element engages, and often also substantially to a bottom side - facing the roof tile - of the arm of the roof hook situated above. The stabilization element engages on one side with a top side of the roof tile and engages on the other side with a part of the roof hook situated above which is at a distance from the roof tile. The part of the roof hook situated above typically refers to the part of the roof hook which is situated closest with respect to the contact part of the top side of the roof tile with which the stabilization element engages. Generally, this means that a mathematical normal which engages with said contact part of the top side of the roof tile points in the direction of the part of the roof hook situated above, wherein this mathematical normal virtually passes through the part of the roof hook situated above.

The stabilization element preferably comprises at least one filler segment which is at least partially deformable, in particular flexible. In this case, the filler segment may be plastically deformable (permanently deformable) and/or elastically deformable (flexible). The deformable nature of the one or more filler segments makes it possible to fill the space to be bridged between the roof tile and the roof hook, so that the stacked filler segments engage with both the roof tile and the roof hook. An additional advantage of using one or more flexible filler segments is that this gives the stabilization element an impact-absorbing character, as a result of which the stabilization element is particularly suitable for absorbing impact and load. The stabilization element absorbs the load to which the roof hook is subjected by, for example, the attached top structure and/or the one or more solar panels, but also additional forces on the roof hook which may arise in the event of storms or other weather influences. The stabilization element ensures that the load on the roof hook, in particular on the profile parts of the roof hook, and the roof tile is absorbed more effectively. It is thus possible to prevent peak loads being exerted on the roof tile.

More preferably, the stabilization element is configured to be deformable in its entirety, in particular flexible. In this case, it is preferred if at least one filler segment, and more preferably the stabilization element, and in particular the stabilization element as such, is at least partially made of a flexible plastic, such as an elastomer, rubber, and in particular silicone rubber. An advantage of using at least one flexible plastic is that this ensures that the stabilization element can experience an improved grip, as the stabilization element can engage with both the roof tile and the roof hook under prestress, and may possibly shape itself around a part of the roof hook. Such a prestress results in a stable positioning of the stabilization element during use. It is also possible to select a flexible plastic, such as rubber, with a rough surface, as a result of which it is possible to combat shearing of the stabilization element with respect to the roof tile and/or the roof hook, which further benefits the stabilization of the stabilization element during use. Due to the roughness of, for example, rubber or another plastic, usually no adhesive means (glue) are needed to be able to install the stabilization element between the roof hook and the roof tile in a stable, reliable and durable manner. However, the possible use of adhesive means for glueing or adhering the stabilization element to the roof tile and/or the roof hook is not precluded.

In a preferred embodiment, the chain of several filler segments pivotably connected to one another is made of one unit, and preferably the stabilization element is made of one unit (of one piece). The production process can thus be simplified, with inter alia the number of process steps being reduced, which is advantageous from a financial and a logistical perspective. In this case, the pivotable connection between each two adjacent filler segments is preferably formed by a film hinge.

In a preferred embodiment of the stabilization element, at least a part of the fastening element is formed by a filler segment configured to engage with a rear side of the roof hook which faces a roof tile. In this way, the fastening element acquires a multifunctional character. The fastening element is preferably pivotably connected to the chain of (other) filler segments. This usually simplifies the deformation of the stabilization element from an initial (extended) position into a stacked (compact) position and also makes it easier to allow the fastening element to also function as a filler segment and to be included in the stack of filler segments for filling the space between the roof hook and the roof tile.

In a preferred embodiment, the chain, and preferably the stabilization element, is deformable between an extended position, in which the filler segments are situated substantially in the same plane, and a stacked (compact) position, in which at least two filler segments are stacked on top of one another, wherein frontal sides of at least two filler segments face each other, and preferably directly engage with one another. Preferably, at least two adjoining filler segments during the deformation of the chain, in particular the stabilization element, are pivoted with respect to one another from the extended position into the stacked position through an angle of between 175 and 185 degrees, wherein said angle is preferably substantially 180 degrees. More preferably, at least one filler segment may be substantially completely folded over with respect to at least one adjoining filler segment, as a result of which a zigzag structure of filler segments can de facto be created. In addition to the two-sided engagement of the stabilization element with the roof tile and with the roof hook coupled to the roof tile, this gives rise to engagement of the filler segments with one another. In this case, frontal sides of adjacent filler segments will usually at least partially come to rest against one another. In this case, a top side of a first filler segment will usually be positioned against a top side of an (adjacent) second filler segment, and a rear side of the second filler segment will be positioned against a rear side of an (adjacent) third filler segment, etc.

In a preferred embodiment of the stabilization element, adjacent filler segments are connected to one another by means of at least one deformable bridge element, which bridge element is preferably, as mentioned above, formed by a film hinge. The bridge element usually has a smaller thickness than the adjacent filler segments, as a result of which it pivots more easily than the filler segments. The bridge element usually extends over the length of at least one of the adjoining filler segments. Another option is for one or more narrow bridge elements - oriented in parallel - to connect adjacent filler segments.

In a possible embodiment of the stabilization element, each filler segment pivotably connected to at least two adjoining filler segments by means of a first bridge element and a second bridge element, respectively, is provided with a first frontal side and an opposite second frontal side, wherein the first bridge element is positioned closer to the first frontal side than to the second frontal side, and wherein the second bridge element is positioned closer to the second frontal side than to the first frontal side. This alternative positioning of the bridge elements allows a relatively large (unhindered) pivoting - usually of around 180 degrees - of adjacent filler segments with respect to one another in a predefined direction. This makes it relatively simple to realize a zigzag structure of filler segments. In a particular preferred embodiment of the stabilization element, the first bridge element adjoins the first frontal side of the filler segment, and the second bridge element adjoins the second frontal side of the filler segment. By allowing a bridge element to adjoin a frontal side, at least a part of both components is positioned in the same plane, which generally benefits the pivotability of the filler segments. More preferably, each filler segment pivotably connected to at least two adjoining filler segments by means of a first bridge element and a second bridge element, respectively, spans a central (imaginary) plane, which plane is situated between the first frontal side and the second frontal side, wherein at least a part of the first bridge element and at least a part of the second bridge element are positioned on either side of the central plane. Such a positioning of the bridge elements with respect to the filler segments further increases a desired (maximum) pivotability of the filler segments with respect to each other.

The stabilization element is configured in such a way that at least one filler segment is provided with a coupling member, and wherein at least one other, preferably adjacent, filler segment is provided with a complementary coupling member, wherein the coupling member and the complementary coupling member are configured to interact with one another in the stacked position of said filler segments. The use of coupling members and complementary coupling members makes it possible to secure (lock) filler segments with respect to one another, and in particular to stabilize (secure) stacked filler segments with respect to one another, which benefits the stability of the stabilization element as such during the operational state. The coupling is preferably detachable in nature, which means that coupled filler segments can be uncoupled from one another relatively easily. In a possible variant embodiment of the stabilization element, at least one filler segment is provided on a first frontal side with a first coupling member and is provided on an opposite second frontal side with a second coupling member, wherein the first coupling member is configured to interact with a complementary coupling member of a first adjacent filler segment, and wherein the second coupling member is configured to interact with a complementary coupling member of a second adjacent filler segment. In this case, the first coupling member provided on the first frontal side of the filler segment and the second coupling member provided on the opposite second frontal side of the same filler segment are preferably substantially shaped in a complementary manner. It is also conceivable for the first coupling member provided on the first frontal side of the filler segment and the second coupling member provided on the opposite second frontal side of the same filler segment to be substantially shaped in an identical manner.

In a preferred embodiment of the stabilization element according to the invention, at least one filler segment is provided with a male coupling member, and at least one adjacent filler segment is provided with a complementary female coupling member, wherein the male coupling member and the complementary female coupling member are configured to interact with one another in the stacked position of said filler segments, and wherein the maximum width of the male coupling member is greater than the width of a passage opening for the male coupling member formed by the female coupling member. This specific form means that the male coupling member can be accommodated in the female coupling member in a secured manner. At least one coupling member out of the male coupling member and/or the female coupling member may, for example, be (elastically) deformed in order to allow passage through the passage opening. As a result, the male coupling member can be retained and secured (locked) in the female coupling member.

The fastening element is usually configured to be mechanically fastened to a roof hook, preferably by means of gripping, clamping, inserting through an opening, drilling or in some other mechanical way. The fastening element is preferably configured to surround, in particular grip, the roof hook on several sides. More preferably, the fastening element is configured to engage with both a bottom side and a top side of a roof hook. In this case, the fastening element may possibly also engage with opposite longitudinal sides of the roof hook. This results in a four-sided engagement of the fastening element with the roof hook, which benefits the stabilization of the stabilization element as such. In a possible embodiment of the stabilization element, the fastening element comprises a substantially U-shaped profile for at least partially surrounding, preferably at least partially gripping, the roof hook. A U-shaped profile facilitates engagement of the roof hook on several sides and thus ensures that the fastening element is properly secured. Preferably, the substantially U-shaped profile is in this case provided with at least one inwardly projecting flange for securing a roof hook which is at least partially surrounded by the substantially U-shaped profile.

It is conceivable for the fastening element to comprise an adhesive surface (adhesive layer) for fastening the fastening element, and thus the stabilization element as such, to a roof hook.

Preferably, the width of the fastening element is substantially equal to the width of one other filler segment. The is advantageous for the stability of the stabilization element in a stacked position, particularly if the fastening element also functions as a filler segment.

The invention also relates to an assembly of a stabilization element as described above, and a roof hook, wherein the fastening element of the stabilization element is connected to the roof hook. In this case, it is possible for the fastening element of the stabilization element to be detachably connected to the roof hook. It is also possible for the fastening element to engage with the roof hook under prestress. In this case, the fastening element can be configured to be elastic. Preferably, the fastening element is connected to the roof hook in a secured manner. The roof hook usually comprises an arm situated below which is configured to be covered by a roof tile and an arm situated above which is connected - usually via a connecting bridge of the roof hook - to the arm situated below and which, during use, is usually positioned substantially above a top side of the roof tile. The arm situated below is in this case configured to engage with a tile batten or other roof element and/or to be fitted, for example by means of screws, to a roof. A free end of the arm situated above which faces away from the connecting bridge is usually provided with a coupling structure to allow the roof hook to be coupled to a mounting rail for supporting solar panels. Preferably, the assembly also comprises a roof tile, wherein the roof hook is coupled to the roof tile, wherein at least a number of filler segments of the stabilization element which are pivotable with respect to one another are brought into a stacked position, wherein a space between the roof tile and the roof hook coupled to the roof tile is filled, and wherein the stabilization element on one side engages with a top side of the roof tile and on the other side engages with a part (of the arm situated above) of the roof hook situated above which is at a distance from the roof tile. From the point of view of stability, it is usually advantageous if the stacked filler segments are clamped by the roof tile on one side and the roof hook on the other side. The roof hook usually at least partially surrounds a top side wall (top end side) of the roof tile, wherein a front side (top side) of the roof tile is provided with an upwardly projecting structure, in particular a water-repellent structure, with which a part of the roof hook engages, and wherein the stabilization element is positioned at a distance from said upwardly projecting structure of the roof tile, and more preferably also at a distance from all side walls of the roof tile.

The invention also relates to a method for using a stabilization element according to the invention in an assembly according to the invention, comprising the steps: A) fastening the fastening element to a part of a roof hook which is situated above the roof tile; and B) pivoting at least one filler segment with respect to the fastening element and/or with respect to at least one other filler segment in such a way that a stacked position of several filler segments is created which fills a space between a top side of the roof tile and a part of the roof hook coupled to the roof tile which is situated above, in which the stabilization element on one side engages with a top side of the roof tile and on the other side engages with a part of the roof hook situated above which is at a distance from the roof tile. The invention additionally relates to the use of a stabilization element according to the invention for stabilizing a roof hook with respect to a roof tile.

The invention will be explained by means of non-limiting exemplary embodiments which are illustrated in the following figures, in which:
Figure 1a shows a perspective view of a stabilization element according to the invention;
Figure 1b shows a side view of the stabilization element as shown in Figure 1a;
Figures 2a-c diagrammatically show cross sections of possible variant embodiments of a stabilization element according to the invention in a stacked position;
Figures 3a-c diagrammatically show cross sections of possible variant embodiments of the fastening element of a stabilization element according to the invention;
Figures 4a and 4b show a perspective view of an assembly of a roof tile, a roof hook and a stabilization element as shown in Figure 1; and
Figures 5a and 5b show cross sections of an assembly of a roof tile, a roof hook and a stabilization element as shown in Figures 4a and 4b.

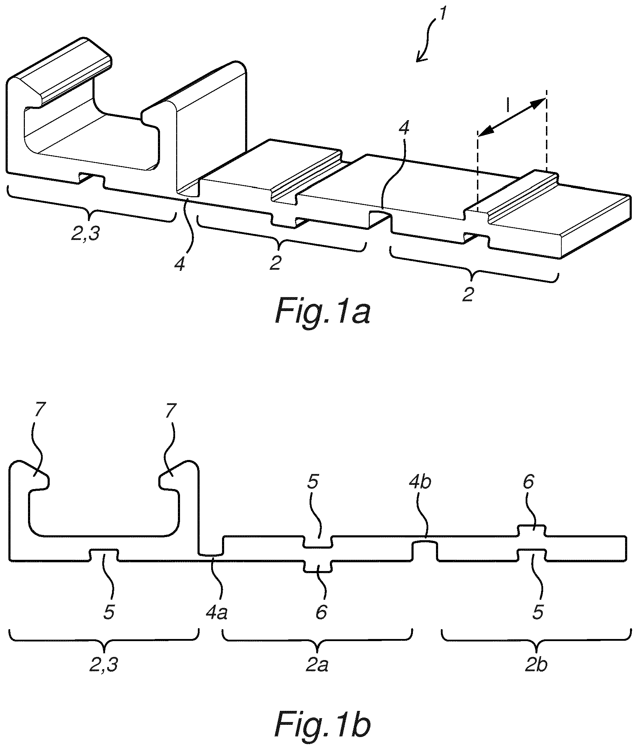

Figures 1a and 1b show a perspective view and a side view, respectively, of a stabilization element (1) according to the invention, in an extended position. The stabilization element (1) comprises a chain of several filler segments (2) pivotably connected to one another, and a fastening element (3) connected to the chain for fastening the stabilization element to a roof hook (not shown). A part of the fastening element (3) is formed by a filler segment (2). The filler segments (2) are connected to one another by means of a deformable bridge element (4), in particular by means of a film hinge (4). The first film hinge (4a), which is between the fastening element (3) and the adjoining first filler segment (2a), adjoins a first frontal side of the fastening element (3) and a first frontal side of said first filler segment (2a) which is in line therewith. The second film hinge (4b), which is between the first filler segment (2a) and an adjoining second filler segment (2b), adjoins a second frontal side of the first filler segment (2a) which is opposite the first frontal side and a second frontal side of the adjoining second filler segment (2b) which is in line therewith. The first filler segment (2a) is provided with a plurality of coupling members (5, 6), which coupling members (5, 6) are configured to interact with complementary coupling members of the adjacent fastening element (3) and the adjacent second filler segment (2b), respectively. The first frontal side of the fastening element (3) is provided with a female coupling member (5), which is configured to interact with the complementary male coupling member (6) of the first filler segment (2a), which is positioned on the first frontal side of the first filler segment (2a). The second frontal side of the first filler segment (2a) is provided with a female coupling member (5), which is configured to interact with a complementary male coupling member (6) of the adjoining second filler segment (2b). In the embodiment shown, each filler segment (2) is provided with one or more coupling members (5, 6) which extend over the entire length (I) of a filler segment (2). In the variant embodiment shown, the fastening element (3) is embodied in a substantially U-shaped profile, which is provided with two inwardly projecting flanges (7), in order to facilitate gripping and securing of a part of the roof hook (not shown).

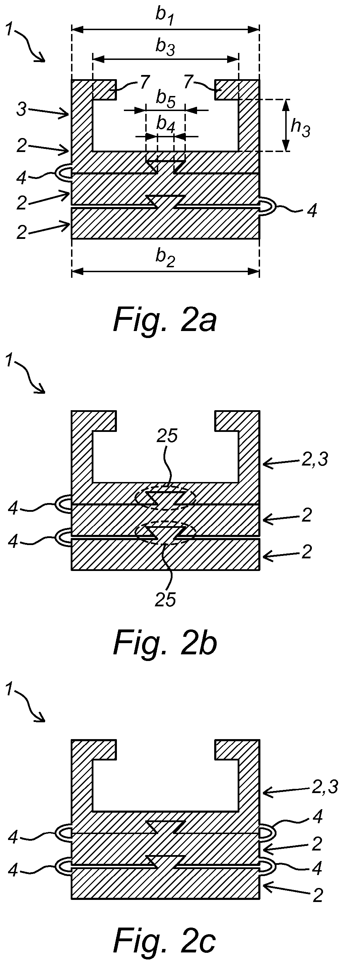

Figures 2a-c diagrammatically show cross sections of possible variant embodiments of stabilization elements (1) according to the invention. The figures show various optional configurations for a stabilization element (1) in a stacked position. The filler segments (2) are substantially completely folded over with respect to an adjoining filler segment (2), wherein the fastening element (3) and the filler segments (2) are coupled by means of the male and female coupling members (5, 6). The figures show the mutual interaction between the complementary coupling members of the fastening element (3) and the adjoining filler segments (2), wherein several coupling connections (25) are formed. It can be seen that the maximum width (b5) of the male coupling members shown is greater than the width of the passage openings (b4) for a male coupling member formed by the female coupling member. The bridge elements (4, 4a, 4b) are brought into a deformed state and project in an alternating manner with respect to the filler segments (2) stacked on top of one another. The width (b1) of the fastening element (3) is substantially identical to the width (b2) of the filler segments (2) with which the fastening element (3) interacts. Preferably, the internal width (b3) of the fastening element (3) is substantially identical to the width of the part of the roof hook (not shown) to which the fastening element (3) is fastened. The internal height (h3), measured between the second frontal surface of the fastening element (3) and an inwardly projecting flange (7) is preferably substantially identical to the height of the part of the roof hook which interacts with the stabilization element (1).

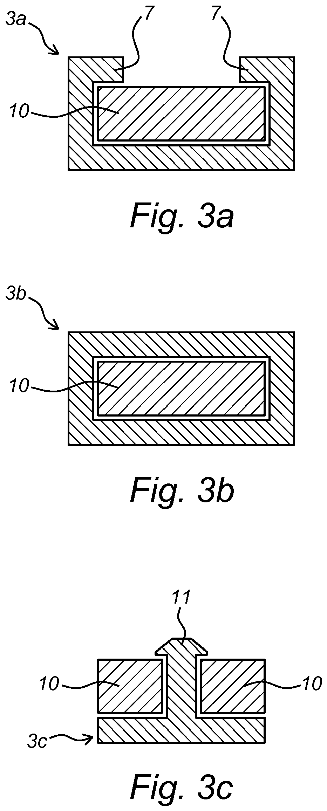

Figures 3a-c diagrammatically show cross sections of possible variant embodiments of the fastening element (3) of a stabilization element (1) according to the invention. In the figures shown, the fastening elements (3) are illustrated in an isolated manner. It will be clear that the fastening elements (3) are configured to interact with a chain of filler segments in order to form a stabilization element according to the invention.

Figure 3a shows a fastening element (3a) which comprises a substantially U-shaped profile, which is provided with two inwardly projecting flanges (7). The flanges (7) are configured to interact with a part of the roof hook (10). The fastening element (3a) is configured to engage with the roof hook (10) on several sides. The fastening element (3a) adjoins the roof hook (10) in a substantially dimensionally stable manner. If there is a minimal space between the fastening element (3a) and the part of the roof hook (10) to which it is coupled, this will have a positive influence on the stability of the fastening and thus the stability of the stabilization element.

Figure 3b shows a possible variant embodiment wherein the fastening element (3b) completely surrounds the roof hook (10). The variant shown ensures that the roof hook (10) is properly secured. A stabilization element provided with a fastening element (3b) as shown in Figure 3b may, for example, be fastened to the roof hook (10) before the roof hook (10) is brought into position on the roof. The fastening element (3b) may, for example, be pushed onto an arm or profile part of the roof hook (10).

Figure 3c shows a next possible variant embodiment, wherein the fastening element (3c) substantially comprises a T-shaped profile. The fastening element (3c) shown is configured to interact with a roof hook (10) which is provided with a recess, for example as in the embodiment shown, around the centre line of the roof hook (10). At the bottom of the leg of the T profile, the fastening element (3c) is provided with a mushroom-shaped protuberance (11), configured to secure the fastening element (3c) with respect to the roof hook (10). As the fastening element (3c) is configured to be substantially flexible, it is possible to pass the mushroom-shaped protuberance (11) through the recess of the roof hook (10), until the sides of the mushroom (11) secure the roof hook (10).

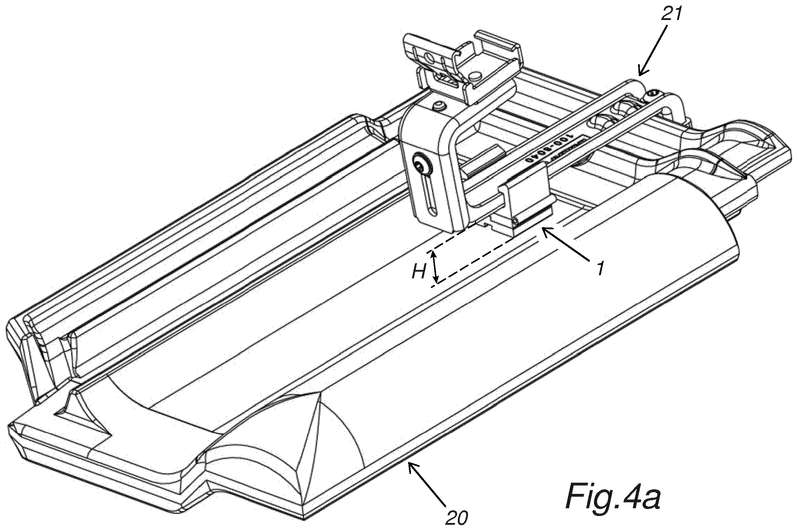

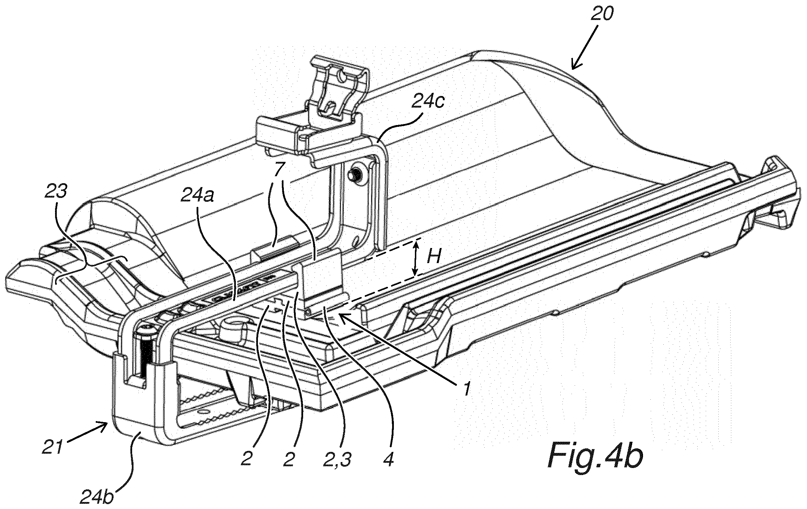

Figures 4a and 4b show a perspective view of an assembly of a roof tile (20), a roof hook (21) and a stabilization element (1) as shown in Figures 1a and 1b. The front side of the roof tile (20) is provided with a profiled and upwardly projecting structure provided with a projecting edge (23), with which a part of the roof hook (21) engages. The roof hook (21) is positioned in a plane that lies substantially above the lowest part of the surface of the top side of the roof tile (20).
The roof hook (21) consists of a plurality of profile parts (24a, 24b, 24c) and is configured to interact with a top structure which is to be coupled.

The profile parts (24a, 24b) of the roof hook (21) are oriented substantially parallel to one another and along a longitudinal axis of the roof tile (20). Such a parallel configuration of the profile parts (24a, 24b) of the roof hook (21) is desired in order to be able to offer stable support for the top structure to be coupled (not shown), and thus the one or more solar panels. The fact that the roof hook (21) engages with the projecting structure (23) of the roof tile (20) creates a space, with height H, between the top side of the roof tile and a part of the roof hook (21) coupled to the roof tile (20) which is situated above. The stabilization element (1) is configured to bridge this space and to prevent deformation and/or displacement of the roof hook (21) from occurring. The fastening element (3) secures the roof hook (21), wherein the inwardly projecting flanges (7) interact with the longitudinal edges of the roof hook (21). The stabilization element (1) is brought into a stacked position by pivoting the filler segments (2). There is two-sided engagement of the stabilization element (1), wherein the filler segment, which is also configured as a fastening element (2, 3), engages with the roof hook (21) and at least one other filler segment (2) engages with a part of a top side of the roof tile (20) that is situated substantially below the point of engagement of the fastening element (2, 3) and the roof hook. The filler segments (2) of the stabilization element (1) are pivoted in such a way that the chain of filler segments (2) no longer forms a strip but a stabilization structure. However, it is possible that not all filler segments (2) present in the chain are necessary for bridging the height H, as a result of which it is possible that a part of the chain remains intact.

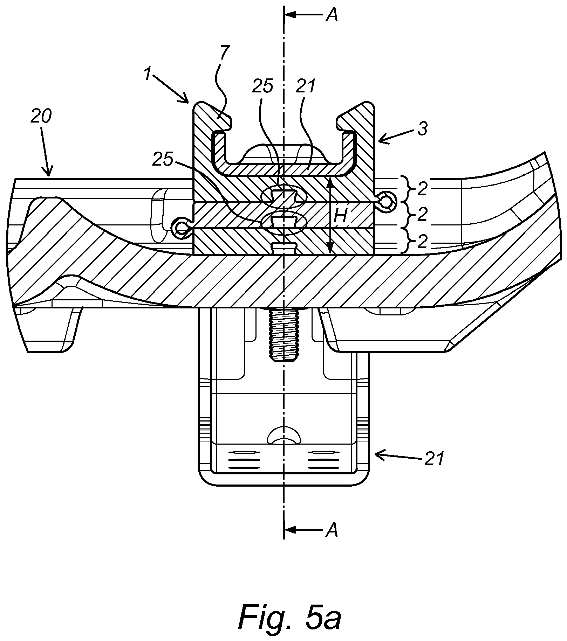

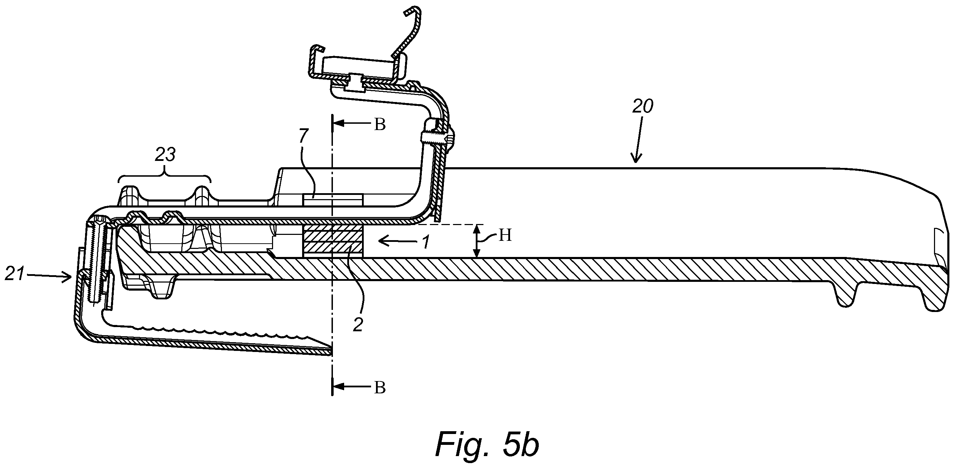

Figures 5a and 5b show cross sections of an assembly of a roof tile (20), a roof hook (21) and a stabilization element (1) as shown in Figures 4a and 4b. In this case, Figure 5a shows a cross section along line B as shown in Figure 5b, and Figure 5b shows a cross section along line A as shown in Figure 5a.

Figure 5a shows that a space, with height H, between the roof tile (20) and a roof hook (21) coupled to the roof tile (20) is substantially completely filled by the stabilization element (1). In this case, there is two-sided engagement of the stabilization element (1); on one side with a part of the roof hook (21) facing the roof tile (20) and on the other side with the top side of the roof tile (20). The stabilization element (1) is positioned on a substantially flat surface of the top side of the roof tile (20). In the configuration shown, two coupling connections (25) are formed by coupling complementary coupling members of adjoining filler segments (2). Figure 5b shows that the roof hook (21) engages with a profiled part (23) of the roof tile (20). The projecting structure of the profiled part (23), in particular, ensures that the roof hook (21), and particularly a profile part (24a) thereof, does not adjoin the top side of the roof tile (20).

It will be clear that the invention is not limited to the exemplary embodiments illustrated and described here, but that countless variants are possible within the scope of the invention defined by the attached claims.

The verb 'comprise' and its conjugations used in this patent is understood to not only mean 'comprise', but also to mean the expressions 'contain', 'substantially consist of', 'formed by', and conjugations thereof.

## Claims

1. Stabilization element (1) for stabilizing a roof hook (21) with respect to a roof tile (20), comprising:
a a chain of several filler segments (2) pivotably connected to one another, and
a at least one fastening element (3) connected to the chain for fastening the stabilization element (1) to a roof hook (21),
wherein the filler segments (2) are pivotable with respect to one another in such a way that several filler segments (2) can be brought into a stacked position in order to fill a space between a roof tile (20) and a roof hook (21) coupled to the roof tile (20) in which the stabilization element (1) on one side engages with a top side of the roof tile (20) and on the other side engages with a part of the roof hook (21) situated above which is at a distance from the roof tile (20), **characterized in that**
at least one filler segment (2) is provided with a coupling member (5, 6), and wherein at least one adjacent filler segment (2) is provided with a complementary coupling member (5, 6), wherein the coupling member (5, 6) and the complementary coupling member (5, 6) are configured to interact with one another in the stacked position of said filler segments (2).

2. Stabilization element (1) according to Claim 1, wherein at least one filler segment (2) is at least partially deformable, in particular flexible, and wherein, preferably, at least one filler segment (2), and preferably the stabilization element (1), is at least partially made of a flexible plastic, in particular rubber, more particularly silicone rubber.

3. Stabilization element (1) according to Claim 2, wherein the stabilization element (1) is substantially completely deformable, in particular flexible.

4. Stabilization element (1) according to one of the preceding claims, wherein the chain of several filler segments (2) pivotably connected to one another is made of one unit, and preferably the stabilization element (1) is made of one unit.

5. Stabilization element (1) according to one of the preceding claims, wherein at least a part of the fastening element (3) is formed by a filler segment (2) configured to engage with a rear side of the roof hook (21) which faces a roof tile (20).

6. Stabilization element (1) according to one of the preceding claims, wherein the chain of several filler segments (2) pivotably connected to one another is pivotably connected to the fastening element (3).

7. Stabilization element (1) according to one of the preceding claims, wherein adjacent filler segments (2) are connected to one another by means of at least one deformable bridge element (4), which bridge element (4) is preferably formed by a film hinge (4), wherein, preferably, the maximum thickness of a filler segment (2) is greater than the maximum thickness of each bridge element (4) connected to said filler segment (2).

8. Stabilization element (1) according to Claim 7, wherein each filler segment (2) pivotably connected to at least two adjoining filler segments (2) by means of a first bridge element (4) and a second bridge element (4), respectively, is provided with a first frontal side and an opposite second frontal side, wherein the first bridge element (4) is positioned closer to the first frontal side than to the second frontal side, and wherein the second bridge element (4) is positioned closer to the second frontal side than to the first frontal side, wherein the first bridge element (4) preferably adjoins the first frontal side of the filler segment (2), and wherein the second bridge element (4) adjoins the second frontal side of the filler segment (2).

9. Stabilization element (1) according to one of the preceding claims, wherein at least one filler segment (2) is provided on a first frontal side with a first coupling member (5, 6) and is provided on an opposite second frontal side with a second coupling member (5, 6), wherein the first coupling member (5, 6) is configured to interact with a complementary coupling member (5, 6) of a first adjacent filler segment (2), and wherein the second coupling member (5, 6) is configured to interact with a complementary coupling member (5, 6) of a second adjacent filler segment (2).

10. Stabilization element (1) according to one of the preceding claims, wherein at least one filler segment (2) is provided with a male coupling member (6), and wherein at least one adjacent filler segment (2) is provided with a complementary female coupling member (5), wherein the male coupling member (6) and the complementary female coupling member (5) are configured to interact with one another in the stacked position of said filler segments (2), and wherein the maximum width of the male coupling member (6) is greater than the width of a passage opening for the male coupling member (6) formed by the female coupling member (5).

11. Stabilization element (1) according to one of the preceding claims, wherein the fastening element (3) comprises a substantially U-shaped profile for at least partially surrounding, preferably at least partially gripping, the roof hook (21), wherein the substantially U-shaped profile is preferably provided with at least one inwardly projecting flange (7) for securing a roof hook (21) which is at least partially surrounded by the substantially U-shaped profile.

12. Assembly of a stabilization element (1) according to one of the preceding claims, and a roof hook (21), wherein the fastening element (3) of the stabilization element (1) is connected to the roof hook (21).

13. Assembly according to Claim 12, wherein the assembly also comprises a roof tile (20), wherein the roof hook (21) is coupled to the roof tile (20), wherein at least a number of filler segments (2) of the stabilization element (1) which are pivotable with respect to one another are brought into a stacked position, wherein a space between the roof tile (20) and the roof hook (21) coupled to the roof tile (20) is filled, and wherein the stabilization element (1) on one side engages with a top side of the roof tile (20) and on the other side engages with a part of the roof hook (21) situated above which is at a distance from the roof tile (20).

14. Method for using a stabilization element (1) according to one of Claims 1-11 in an assembly according to Claim 13, comprising the steps:
A) fastening the fastening element (3) to a part of a roof hook (21) which is situated above the roof tile(20); and
B) pivoting at least one filler segment (2) in such a way that a stacked position of several filler segments (2) is created which fills a space between a top side of the roof tile (20) and a part of the roof hook (21) coupled to the roof tile (20) which is situated above, in which the stabilization element (1) on one side engages with a top side of the roof tile (20) and on the other side engages with a part of the roof hook (21) situated above which is at a distance from the roof tile (20).

15. Use of a stabilization element (1) according to one of Claims 1-11 for stabilizing a roof hook (21) with respect to a roof tile (20).

## Patentansprüche

1. Stabilisierungselement (1) zum Stabilisieren eines Dachhakens (21) in Bezug auf einen Dachziegel (20), umfassend:
- eine Kette mehrerer Füllsegmente (2), die drehbar miteinander verbunden sind, und
- zumindest ein mit der Kette verbundenes Befestigungselement (3) zum Befestigen des Stabilisierungselements (1) an einem Dachhaken (21), wobei die Füllsegmente (2) untereinander so drehbar sind, dass mehrere Füllsegmente (2) in eine Stapellage gebracht werden können, um einen Raum zwischen einem Dachziegel (20) und einem mit dem Dachziegel (20) gekoppelten Dachhaken (21) zu füllen, in dem das Stabilisierungselement (1) auf einer Seite mit einer Oberseite des Dachziegels (20) in Eingriff steht und auf der anderen Seite mit einem darüber befindlichen Teil des Dachhakens (21), der vom Dachziegel (20) beabstandet ist, in Eingriff steht,
**dadurch gekennzeichnet, dass**
zumindest ein Füllsegment (2) mit einem Kopplungselement (5, 6) bereitgestellt ist und wobei zumindest angrenzendes Füllsegment (2) mit einem komplementären Kopplungselement (5, 6) bereitgestellt ist, wobei das Kopplungselement (5, 6) und das komplementäre Kopplungselement (5, 6) dazu gestaltet sind, in der Stapellage der Füllsegmente (2) miteinander zusammenzuwirken.

2. Stabilisierungselement (1) nach Anspruch 1, wobei zumindest ein Füllsegment (2) zumindest teilweise verformbar, insbesondere flexibel ist und wobei vorzugsweise zumindest ein Füllsegment (2) und vorzugsweise das Stabilisierungselement (1) zumindest teilweise aus einem flexiblen Kunststoff, insbesondere Gummi, ganz besonders Silikongummi, gefertigt ist.

3. Stabilisierungselement (1) nach Anspruch 2, wobei das Stabilisierungselement (1) im Wesentlichen vollständig verformbar, insbesondere flexibel ist.

4. Stabilisierungselement (1) nach einem der vorangehenden Ansprüche, wobei die Kette mehrerer drehbar miteinander verbundener Füllsegmente (2) aus einer Einheit gefertigt ist und vorzugsweise das Stabilisierungselement (1) aus einer Einheit gefertigt ist.

5. Stabilisierungselement (1) nach einem der vorangehenden Ansprüche, wobei zumindest ein Teil des Befestigungselements (3) durch ein Füllsegment (2) ausgebildet ist, das dazu gestaltet ist, mit einer Rückseite des Dachhakens (21), die einem Dachziegel (20) zugewandt ist, in Eingriff zu stehen.

6. Stabilisierungselement (1) nach einem der vorangehenden Ansprüche, wobei die Kette mehrerer miteinander verbundener Füllsegmente (2) mit dem Befestigungselement (3) drehbar verbunden ist.

7. Stabilisierungselement (1) nach einem der vorangehenden Ansprüche, wobei benachbarte Füllsegmente (2) mit Hilfe zumindest eines verformbaren Brückenelements (4) miteinander verbunden sind, wobei das Brückenelement (4) vorzugsweise durch ein Filmgelenk (4) ausgebildet ist, wobei vorzugsweise die maximale Dicke eines Füllsegments (2) größer als die maximale Dicke jedes mit dem Füllsegment (2) verbundenen Brückenelements (4) ist.

8. Stabilisierungselement (1) nach Anspruch 7, wobei jedes Füllsegment (2), das mit Hilfe eines ersten Brückenelements (4) bzw. eines zweiten Brückenelements (4) mit zumindest zwei benachbarten Füllsegmenten (2) verbunden ist, mit einer ersten Stirnseite und einer gegenüberliegenden zweiten Stirnseite bereitgestellt ist, wobei das erste Brückenelement (4) näher zur ersten Stirnseite als zur zweiten Stirnseite positioniert ist und wobei das zweite Brückenelement (4) näher zur zweiten Stirnseite als zur ersten Stirnseite positioniert ist, wobei das erste Brückenelement (4) vorzugsweise an die erste Stirnseite des Füllsegments (2) angrenzt und wobei das zweite Brückenelement (4) an die zweite Stirnseite des Füllsegments (2) angrenzt.

9. Stabilisierungselement (1) nach einem der vorangehenden Ansprüche, wobei zumindest ein Füllsegment (2) auf einer ersten Stirnseite mit einem ersten Kopplungselement (5, 6) bereitgestellt ist und auf einer gegenüberliegenden zweiten Stirnseite mit einem zweiten Kopplungselement (5, 6) bereitgestellt ist, wobei das erste Kopplungselement (5, 6) dazu gestaltet ist, mit einem komplementären Kopplungselement (5, 6) eines ersten benachbarten Füllsegments (2) zusammenzuwirken und wobei das zweite Kopplungselement (5, 6) dazu gestaltet ist, mit einem komplementären Kopplungselement (5, 6) eines zweiten benachbarten Füllsegments (2) zusammenzuwirken.

10. Stabilisierungselement (1) nach einem der vorangehenden Ansprüche, wobei zumindest ein Füllsegment (2) mit einem männlichen Kopplungselement (6) bereitgestellt ist und wobei zumindest ein benachbartes Füllsegment (2) mit einem komplementären weiblichen Kopplungselement (5) bereitgestellt ist, wobei das männliche Kopplungselement (6) und das komplementäre weibliche Kopplungselement (5) dazu gestaltet sind, in der Stapellage der Füllsegmente (2) miteinander zusammenzuwirken, und wobei die maximale Breite des männlichen Kopplungselements (6) größer als die Breite einer durch das weibliche Kopplungselement (5) ausgebildeten Durchgangsöffnung für das männliche Kopplungselement (6) ist.

11. Stabilisierungselement (1) nach einem der vorangehenden Ansprüche, wobei das Befestigungselement (3) ein im Wesentlichen U-förmiges Profil umfasst, um den Dachhaken (21) zumindest teilweise zu umgeben, vorzugsweise zumindest teilweise zu erfassen, wobei das im Wesentlichen U-förmige Profil vorzugsweise mit zumindest einem nach innen ragenden Flansch (7) zum Sichern eines Dachhakens (21), der zumindest teilweise durch das im Wesentlichen U-förmige Profil umgeben wird, bereitgestellt ist.

12. Anordnung eines Stabilisierungselements (1) nach einem der vorangehenden Ansprüche und eines Dachhakens (21), wobei das Befestigungselement (3) des Stabilisierungselements (1) mit dem Dachhaken (21) verbunden ist.

13. Anordnung nach Anspruch 12, wobei die Anordnung außerdem einen Dachziegel (20) umfasst, wobei der Dachhaken (21) mit dem Dachziegel (20) gekoppelt ist, wobei zumindest eine Anzahl an Füllsegmenten (2) des Stabilisierungselements (1), die untereinander drehbar sind, in eine Stapellage gebracht wird, wobei ein Raum zwischen dem Dachziegel (20) und dem mit dem Dachziegel (20) gekoppelten Dachhaken (21) gefüllt ist und wobei das Stabilisierungselement (1) auf einer Seite mit einer Oberseite des Dachziegels (20) in Eingriff steht und auf der anderen Seite mit einem darüber befindlichen Teil des Dachhakens (21), der vom Dachziegel (20) beabstandet ist, in Eingriff steht.

14. Verfahren zum Verwenden eines Stabilisierungselements (1) nach einem der Ansprüche 1 - 11 in einer Anordnung nach Anspruch 13, umfassend die folgenden Schritte:
A) Befestigen des Befestigungselements (3) an einem Teil eines Dachhakens (21), der sich über dem Dachziegel (20) befindet; und
B) Drehen zumindest eines Füllsegments (2) so, dass eine Stapellage mehrerer Füllsegmente (2) erzeugt wird, die einen Raum zwischen einer Oberseite des Dachziegels (20) und einem Teil des mit dem Dachziegel (20) gekoppelten Dachhakens (21), der sich darüber befindet, füllt, in dem das Stabilisierungselement (1) auf einer Seite mit einer Oberseite des Dachziegels (20) in Eingriff steht, und auf der anderen Seite mit einem darüber befindlichen Teil des Dachhakens (21), der vom Dachziegel (20) beabstandet ist, in Eingriff steht.

15. Verwendung eines Stabilisierungselements (1) nach einem der Ansprüche 1 - 11 zum Stabilisieren eines Dachhakens (21) in Bezug auf einen Dachziegel (20).

## Revendications

1. Élément de stabilisation (1) pour stabiliser un crochet de toit (21) par rapport à une tuile de toit (20), comprenant :
- une chaîne de plusieurs segments de remplissage (2) connectés de manière pivotante les uns aux autres, et
- au moins un élément de fixation (3) connecté à la chaîne pour fixer l'élément de stabilisation (1) à un crochet de toit (21),
les segments de remplissage (2) pouvant pivoter les uns par rapport aux autres de telle sorte que plusieurs segments de remplissage (2) puissent être amenés dans une position empilée afin de remplir un espace entre une tuile de toit (20) et un crochet de toit (21) accouplé à la tuile de toit (20), dans laquelle l'élément de stabilisation (1) d'un côté, vient en prise avec un côté supérieur de la tuile de toit (20) et de l'autre côté, vient en prise avec une partie du crochet de toit (21) située au-dessus, qui est à une certaine distance de la tuile de toit (20), **caractérisé en ce**
**qu'**au moins un segment de remplissage (2) est pourvu d'un organe d'accouplement (5, 6), et au moins un segment de remplissage adjacent (2) étant pourvu d'un organe d'accouplement complémentaire (5, 6), l'organe d'accouplement (5, 6) et l'organe d'accouplement complémentaire (5, 6) étant configurés pour interagir l'un avec l'autre dans la position empilée desdits segments de remplissage (2).

2. Élément de stabilisation (1) selon la revendication 1, dans lequel au moins un segment de remplissage (2) est au moins en partie déformable, en particulier flexible, et dans lequel, de préférence, au moins un segment de remplissage (2) et de préférence l'élément de stabilisation (1), est au moins en partie fabriqué en plastique flexible, en particulier en caoutchouc, plus particulièrement en caoutchouc de silicone.

3. Élément de stabilisation (1) selon la revendication 2, dans lequel l'élément de stabilisation (1) est substantiellement complètement déformable, en particulier flexible.

4. Élément de stabilisation (1) selon l'une des revendications précédentes, dans lequel la chaîne de plusieurs segments de remplissage (2) connectés de manière pivotante les uns aux autres est fabriquée d'une seule pièce, et de préférence l'élément de stabilisation (1) est fabriqué d'une seule pièce.

5. Élément de stabilisation (1) selon l'une des revendications précédentes, dans lequel au moins une partie de l'élément de fixation (3) est formée par un segment de remplissage (2) configuré pour venir en prise avec un côté arrière du crochet de toit (21) qui fait face à une tuile de toit (20).

6. Élément de stabilisation (1) selon l'une des revendications précédentes, dans lequel la chaîne de plusieurs segments de remplissage (2) connectés de manière pivotante les uns aux autres est connectée de manière pivotante à l'élément de fixation (3).

7. Élément de stabilisation (1) selon l'une des revendications précédentes, dans lequel des segments de remplissage adjacents (2) sont connectés les uns aux autres au moyen d'au moins un élément de pont déformable (4), lequel élément de pont (4) est de préférence formé par une charnière à film (4), de préférence, l'épaisseur maximale d'un segment de remplissage (2) étant supérieure à l'épaisseur maximale de chaque élément de pont (4) connecté audit segment de remplissage (2).

8. Élément de stabilisation (1) selon la revendication 7, dans lequel chaque segment de remplissage (2) connecté de manière pivotante à au moins deux segments de remplissage adjacents (2) au moyen d'un premier élément de pont (4) et d'un deuxième élément de pont (4), respectivement, est pourvu d'un premier côté frontal et d'un deuxième côté frontal opposé, le premier élément de pont (4) étant positionné plus près du premier côté frontal que du deuxième côté frontal, et le deuxième élément de pont (4) étant positionné plus près du deuxième côté frontal que du premier côté frontal, le premier élément de pont (4) étant de préférence adjacent au premier côté frontal du segment de remplissage (2), et le deuxième élément de pont (4) étant adjacent au deuxième côté frontal du segment de remplissage (2).

9. Élément de stabilisation (1) selon l'une des revendications précédentes, dans lequel au moins un segment de remplissage (2) est pourvu, sur un premier côté frontal, d'un premier organe d'accouplement (5, 6) et est pourvu, sur un deuxième côté frontal opposé, d'un deuxième organe d'accouplement (5, 6), le premier organe d'accouplement (5, 6) étant configuré pour interagir avec un organe d'accouplement complémentaire (5, 6) d'un premier segment de remplissage adjacent (2), et le deuxième organe d'accouplement (5, 6) étant configuré pour interagir avec un organe d'accouplement complémentaire (5, 6) d'un deuxième segment de remplissage adjacent (2).

10. Élément de stabilisation (1) selon l'une des revendications précédentes, dans lequel au moins un segment de remplissage (2) est pourvu d'un organe d'accouplement mâle (6) et dans lequel au moins un segment de remplissage adjacent (2) est pourvu d'un organe d'accouplement femelle complémentaire (5), l'organe d'accouplement mâle (6) et l'organe d'accouplement femelle complémentaire (5) étant configurés pour interagir l'un avec l'autre dans la position empilée desdits segments de remplissage (2), et la largeur maximale de l'organe d'accouplement mâle (6) étant supérieure à la largeur d'une ouverture de passage pour l'organe d'accouplement mâle (6) formée par l'organe d'accouplement femelle (5).

11. Élément de stabilisation (1) selon l'une des revendications précédentes, dans lequel l'élément de fixation (3) comprend un profil substantiellement en forme de U pour entourer au moins en partie, de préférence pour saisir au moins en partie, le crochet de toit (21), le profil substantiellement en forme de U étant de préférence pourvu d'au moins une bride (7) saillant vers l'intérieur pour fixer un crochet de toit (21) qui est au moins en partie entouré par le profil substantiellement en forme de U.

12. Assemblage d'un élément de stabilisation (1) selon l'une des revendications précédentes et d'un crochet de toit (21), l'élément de fixation (3) de l'élément de stabilisation (1) étant connecté au crochet de toit (21).

13. Assemblage selon la revendication 12, l'assemblage comprenant également une tuile de toit (20), le crochet de toit (21) étant accouplé à la tuile de toit (20), au moins un certain nombre de segments de remplissage (2) de l'élément de stabilisation (1) qui peuvent pivoter les uns par rapport aux autres étant amenés dans une position empilée, un espace entre la tuile de toit (20) et le crochet de toit (21) accouplé à la tuile de toit (20) étant rempli, et l'élément de stabilisation (1) d'un côté, venant en prise avec un côté supérieur de la tuile de toit (20) et de l'autre côté, venant en prise avec une partie du crochet de toit (21) située au-dessus, qui est à une certaine distance de la tuile de toit (20).

14. Procédé pour utiliser un élément de stabilisation (1) selon l'une des revendications 1 à 11 dans un assemblage selon la revendication 13, comprenant les étapes suivantes :
A) fixation de l'élément de fixation (3) à une partie d'un crochet de toit (21) qui est située au-dessus de la tuile de toit (20) ; et
B) pivotement d'au moins un segment de remplissage (2) de telle sorte qu'une position empilée de plusieurs segments de remplissage (2) soit obtenue, laquelle remplit un espace entre un côté supérieur de la tuile de toit (20) et une partie du crochet de toit (21) accouplé à la tuile de toit (20), qui est située au-dessus, dans laquelle l'élément de stabilisation (1) d'un côté, vient en prise avec un côté supérieur de la tuile de toit (20), et de l'autre côté, vient en prise avec une partie du crochet de toit (21) située au-dessus, qui est à une certaine distance de la tuile de toit (20) .

15. Utilisation d'un élément de stabilisation (1) selon l'une des revendications 1 à 11 pour stabiliser un crochet de toit (21) par rapport à une tuile de toit (20).
